# EUROPEAN PATENT APPLICATION

(11) **EP 3 952 577 A1**
(43) Date of publication of application: **09.02.2022**
(21) Application number: 19921722.5
(22) Date of filing: 28.03.2019
(51) Int. Cl.: H04W 74/08

(54) **USER DEVICE AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/013903
(87) International publication number: WO 2020/194759

(57) **Abstract**

A user equipment includes a control unit that sets a value other than zero, as a timing advance value to be applied for transmitting a random access preamble in a MessageA transmission in a 2-step random access procedure; and a transmitting unit that transmits the random access preamble in the MessageA transmission in the 2-step random access procedure by applying the timing advance value set by the control unit.

## Description

### TECHNICAL FIELD

The present invention relates to user equipment and a communication method in a radio communication system.

### BACKGROUND ART

For 3GPP Release 16 NR, a study on 2-step RACH has been started. According to 2-step RACH, it is considered that time required for processing of RACH (random access channel) can be reduced and power consumption can be reduced.

The 2-step RACH procedure is performed with two steps. Specifically, user equipment transmits MessageA to a base station. The base station transmits MessageB to the user equipment. Here, the MessageA is a message is equivalent to Message1 + Message3 in a 4-step RACH procedure. Furthermore, the MessageB is a message is equivalent to Message2 + Message4 in a 4-step RACH procedure.

### Related Art Document

### [Non-Patent Document]

### [Non-Patent Document]

Non-Patent Document 1: 3GPP TS 38.211 V15.4.0(2018-12)
Non-Patent Document 2: 3GPP TSG RAN Meeting #82, Sorrento, Italy, Dec.10-13, 2018

### SUMMARY OF THE INVENTION

### [PROBLEM TO BE SOLVED BY THE INVENTION]

It has been agreed that an NR PRACH preamble design and an NR physical uplink shared channel (PUSCH) specified in 3GPP Release 15 are reused for the 2-step RACH. Accordingly, physical design items relating to the NR PRACH preamble design and the NR PUSCH may be unchanged. For example, it is assumed that, basically, a cyclic prefix (CP) length is not to be changed.

As a PUSCH for transmitting data included in a MessageA transmission of the 2-step RACH, an NR PUSCH is to be reused. Accordingly, for transmitting data through the PUSCH of the MessageA, it is assumed that a CP with a new CP length is not to be attached. Accordingly, the 2-step RACH may be used only in limited cases, such as a case of a cell with a small cell radius. There is a need for enlarging a range of use cases in which the 2-step RACH can be used.

### [MEANS FOR SOLVING THE PROBLEM]

According to an aspect of the present invention, there is provided a user equipment including a control unit that sets a value other than zero, as a timing advance value to be applied for transmitting a random access preamble in a MessageA transmission in a 2-step random access procedure; and a transmitting unit that transmits the random access preamble in the MessageA transmission in the 2-step random access procedure by applying the timing advance value set by the control unit.

### [ADVANTAGE OF THE INVENTION]

According to an embodiment, there is provided a technique that extends the range of use cases in which the 2-step RACH can be used.

### BRIEF DESCRIPTION OF DRAWINGS

FIG. 1 is a configuration diagram of a communication system according to an embodiment.
FIG. 2 is a diagram illustrating an example of a 4-step RACH (Contention based random access) procedure.
FIG. 3 is a diagram illustrating an example of a 2-step RACH (Contention based random access) procedure.
FIG. 4 is a diagram illustrating an example of a shift between an uplink frame timing and a downlink frame timing.
FIG. 5 is a diagram illustrating an example in which timing advance values are set to zero and a non-zero value in MessageA transmission in a 2-step RACH procedure.
FIG. 6 is a diagram illustrating an example of a functional configuration of a user equipment.
FIG. 7 is a diagram illustrating an example of a functional configuration of a base station.
FIG. 8 is a diagram illustrating an example of a hardware configuration of the user equipment and the base station.

### [EMBODIMENTS OF THE INVENTION]

Hereinafter, embodiments of the present invention are described with reference to the drawings. The embodiments described below are merely examples, and the embodiments to which the present invention is applied are not limited to the following embodiments.

The radio communication system according to the following embodiments is assumed to basically conform to NR, but this is an example, and the radio communication system according to the embodiments may conform to a radio communication system other than NR (e.g., LTE) in whole or in part.

### (Overall System Configuration)

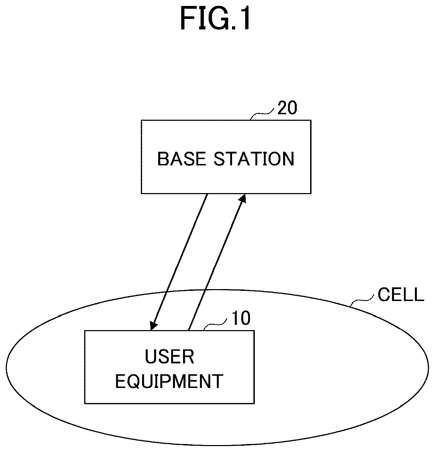

FIG. 1 shows a configuration diagram of a radio communication system according to the present embodiment. The radio communication system according to the embodiments includes a user equipment 10 and a base station 20 as illustrated in FIG. 1. In FIG. 1, one user equipment 10 and one base station 20 are illustrated. This is an example, and there may be a plurality of units of the user equipment 10 and a plurality of the base stations 20.

The user equipment 10 is a communication device having a radio communication function, such as a smartphone, a cellular phone, a tablet, a wearable terminal, and a communication module for M2M (Machine-to-Machine). The user equipment 10 wirelessly connects to the base station 20 and utilizes various communication services provided by the radio communication system. The base station 20 is a communication device that provides one or more cells and wirelessly communicates with the user equipment 10. Both the user equipment 10 and the base station 20 are capable of transmitting and receiving signals by using beamforming. The user equipment 10 may also be referred to as a UE, and the base station 20 may be referred to as a gNB.

In the embodiments, the duplex method may be a TDD (Time Division Duplex) method or an FDD (Frequency Division Duplex).

For the 3GPP release 16NR, a study on a 2-step RACH has been started. According to the 2-step RACH, the time required to process a random access channel (RACH) procedure can be reduced and the power consumption can be reduced.

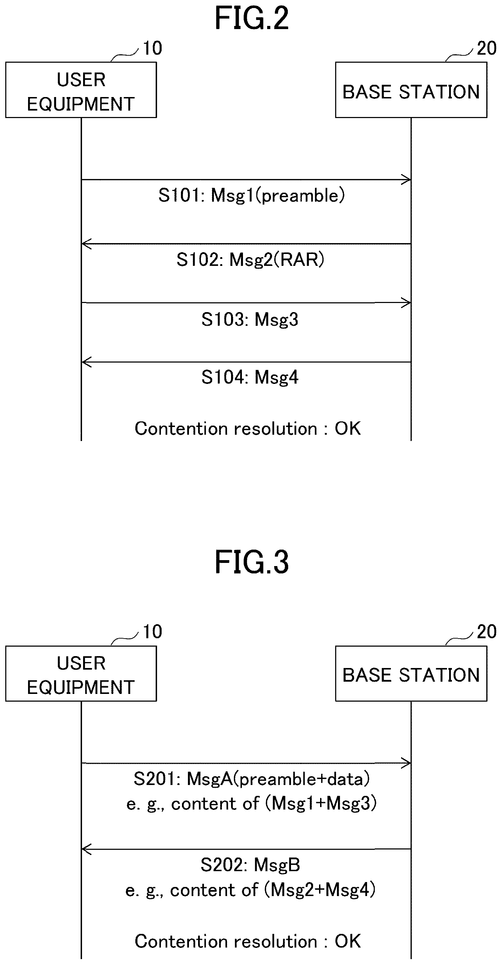

FIG. 2 illustrates an example of a typical 4-step RACH (Contention Based Random Access) procedure.

In the 4-step RACH procedure illustrated in FIG. 2, first, at step S101, the user equipment 10 transmits a Message 1 (random access preamble) to the base station 20. At step S102, the base station 20 transmits a Message2 (random access response (RAR)) to the user equipment 10. At step S103, the user equipment 10 transmits the Message3 to the base station 20. At step S104, the base station 20 transmits the Message4 to the user equipment 10.

FIG. 3 illustrates an example of a 2-step RACH (Contention Based Random Access) procedure.

In the 2-step RACH procedure illustrated in FIG. 3, the RACH procedure is performed in two steps. Specifically, at step S201, the user equipment 10 transmits the MessageA to the base station 20. At step S202, the base station 20 transmits the Message B to the user equipment 10. Here, MessageA is the message equivalent to Message1+Message3 in the 4-step RACH procedure illustrated in FIG. 2. MessageB corresponds to Message2+Message4 in the 4-step RACH procedure illustrated in FIG. 2.

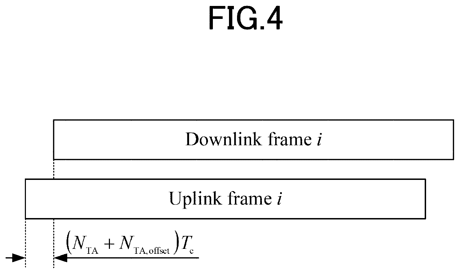

MessageA includes a random access preamble and data sent by Physical Uplink Shared Channel (PUSCH). From a higher layer perspective, MessageA may be considered as a single message. From a physical layer perspective, however, it is assumed that, in MessageA, a random access preamble resource may be a separate resource from a PUSCH resource, for example, as illustrated in FIG. 4. In other words, the transmission of the Message A by the user equipment 10 is assumed to be equivalent to the transmission of two signals, that is, the user equipment 10 transmits a random access preamble and then, before receiving any message from the base station 20, transmits data (equivalent to the Message 3) on the PUSCH. As MessageA, the order of the random access preamble transmission timing and the PUSCH transmission timing may be reversed.

In the 4-step RACH procedure of the 3GPP release 15, for transmitting a random access preamble, a timing advance value N_{TA} is set to zero.

A timing advance value is a value for adjusting timing to be applied to advance a timing for the user equipment 10 to perform an uplink signal transmission, taking into consideration the propagation delay until the signal reaches the base station 20, so that uplink signals transmitted from a plurality of units of the user equipment 10 reach the base station 20 at the same timing. Accordingly, when a propagation delay for an uplink signal transmitted from the user equipment 10 to reach the base station 20 is large, such as a case in which a distance between the user equipment 10 and the base station 20 is large, a timing advance value is preferably set to a large value. The timing advance value is calculated at the base station 20 upon receiving a random access preamble in the RACH procedure. Accordingly, when a random access preamble is transmitted, N_{TA} is set to zero.

However, even if N_{TA} is set to zero, a timing at which the user equipment 10 transmits an uplink signal may shift forward in a time direction compared to a reference timing determined based on reception of a downlink signal from the base station 20. In general, as illustrated in FIG. 4, an uplink frame timing shifts forward in the time direction by the amount (N_{TA}+N_{TA, offset}) T_{c}, compared to a downlink frame timing. Accordingly, even if N_{TA} is set to zero for transmission of a preamble, a timing for transmitting an uplink signal shifts forward in the time direction by the amount N_{TA, offset} × T_{c}, compared to a timing for transmitting a downlink signal.

As described in Non-Patent Document 2, it has been agreed to reuse, for the 2-step RACH, an NR PRACH preamble design and an NR PUSCH specified in Release 15 of 3GPP. Accordingly, it is assumed that physical design items relating to the NR PRACH preamble design and the NR PUSCH are not to be changed. For example, it is assumed that, basically, a cyclic prefix (CP) length is not to be changed.

Here, the CP length of the random access preamble depends on a cell radius. In general, when the cell radius is large, a propagation delay is large, and, thus, the CP length is set to be long.

The reason why the CP length is set to be long is described. First, at a time of transmitting a random access preamble, an appropriate timing advance value has not been determined yet. A timing advance value is an amount for advancing an uplink data transmission timing in consideration of propagation delay so as to optimize data reception timing at the base station 20 in a typical uplink data transmission, or the like, from the user equipment 10. In an uplink data transmission from the user equipment 10, a data reception timing at the base station 20 can be optimized by applying a timing advance value. However, a random access preamble may also be used for calculating a timing advance value (for UL synchronization), and, thus, no timing advance value is typically applied when transmitting a random access preamble. Accordingly, when transmitting a random access preamble, it is necessary to attach a sufficient length of CP (CP length corresponding to a delay time corresponding to a cell radius) to the random access preamble and to attach a guard time to a latter portion of the random access preamble in the time direction, so that the base station 20 can receive the random access preamble even if a propagation delay is large.

As described above, a data transmission through PUSCH in the MessageA of the 2-step RACH is performed before receiving a message from the base station 20. Accordingly, the user equipment 10 is unable to determine a timing advance value before data transmission is performed through PUSCH yet after the random access preamble is transmitted. Thus, for performing a data transmission through PUSCH in Message A of a 2-step RACH, it is necessary to attach a sufficient CP length and guard time.

However, as MessageA PUSCH, the PUSCH specified in NR is to be reused. Accordingly, it is assumed that a CP with a new CP length is not to be attached for transmission of data through the MessageA. That is, a case where the 2-step RACH can be used may be only a case where a distance between the user equipment 10 and the base station 20 is less than or equal to a certain value.

### (Problem)

As described above, when the user equipment 10 does not obtain a timing advance value, a distance between the user equipment 10 and the base station 20, in which the 2-step RACH can be used, may be a limited distance. In this case, if the 2-step RACH can be used only in a case where the distance between the user equipment 10 and the base station 20 is less than or equal to a certain distance in which the 2-step RACH can be used, a usable case of the 2-step RACH is significantly limited.

In this regard, for example, as in a case where the random access procedure is executed for some reasons after the state of the user equipment 10 switches to a connected mode, a case is assumed where the user equipment 10 performs a random access procedure in a state in which a timing advance value obtained by the user equipment 10 is valid. Even if a distance between the user equipment 10 and the base station 20 is greater than or equal to the above-described distance, when the user equipment 10 retains a usable timing advance value, and/or when the user equipment 10 retains information with which a valid timing advance value can be determined, the 2-step RACH can be made usable. As a result, a scope of use cases in which the 2-step RACH is usable can be enlarged.

### (Solution)

As a method of solving the above-described problem, the user equipment 10 may use a value other than zero as a timing advance value N_{TA} that is used in transmission of a random access preamble in Message A of the 2-step RACH.

### (Alt 1)

The user equipment 10 may use a timing advance value N_{TA} that is retained before transmission of a random access preamble in MessageA of the 2-step RACH, as a timing advance value N_{TA} to be applied by the user equipment 10 for transmitting the random access preamble in the MessageA of the 2-step RACH (the user equipment 10 may use a timing advance value that is used in another typical uplink signal transmission or the like). Furthermore, before transmission of a random access preamble in MessageA of the 2-step RACH, the user equipment 10 may calculate a timing advance value N_{TA}, for example, based on a measurement result of a downlink reference signal, or the like, and may use the timing advance value N_{TA} as a timing advance value N_{TA} which is to be applied by the user equipment 10 for transmitting the random access preamble in the MessageA of the 2-step RACH. Here, the information for determining the N_{TA} is not limited to the measurement result of the downlink reference signal, and may be any information that is retained before the user equipment 10 transmits the random access preamble in the Message A of the 2-step RACH.

### (Alt 2)

The user equipment 10 may receive, from the base station 20, a notification of a timing advance value N_{TA} to be applied by the user equipment 10 for transmitting a random access preamble in MessageA of the 2-step RACH. That is, the timing advance value N_{TA} to be applied by the user equipment 10 for transmitting a random access preamble in MessageA may be indicated by the base station 20 to the user equipment 10. Furthermore, the user equipment 10 may, for example, measure a downlink reference signal and the like before transmission of a random access preamble in MessageA of the 2-step RACH, may determine a timing advance value N_{TA} from the measurement result and the like based on the information transmitted from the base station 20, and may use the timing advance value N_{TA} as a timing advance value NTA to be applied by the user equipment 10 for transmitting the random access preamble in the Message A of the 2-step RACH. Here, the information for determining the N_{TA} is not limited to the measurement result of the downlink reference signal, and may be any information retained by the user equipment 10 before transmission the random access preamble in the MessageA of the 2-step RACH.

### (Alt 3)

The user equipment 10 may receive a notification of the timing advance value N_{TA} to be applied by the user equipment 10 for transmitting the random access preamble in the Message A of the 2-step RACH from the base station 20 as a relative value with respect to the aforementioned value in Alt 1.

In addition, as the timing advance value N_{TA} to be applied by the user equipment 10 for transmitting data by the PUSCH in the Message A of the 2-step RACH, the user equipment 10 may use the same value as the timing advance value N_{TA} to be applied by the user equipment 10 for transmission of the random access preamble in the Message A, or the user equipment 10 may use a different value.

### (Option 1)

As the timing advance value N_{TA} to be applied by the user equipment 10 for transmitting data on PUSCH in MessageA of the 2-step RACH, the user equipment 10 may use the same value as the timing advance value N_{TA} to be applied by the user equipment 10 for transmitting the random access preamble in the MessageA.

### (Option 2)

As the timing advance value N_{TA} to be applied by the user equipment 10 for transmitting data on PUSCH in MessageA of the 2-step RACH, the user equipment 10 may always use zero, and, as the timing advance value N_{TA} to be applied by the user equipment 10 for transmitting the random access preamble in the MessageA, a value other than zero may be used.

### (Option 3)

The user equipment 10 may always use zero as the timing advance value N_{TA} to be applied by the user equipment 10 for transmitting a random access preamble in MessageA of the 2-step RACH, and, as the timing advance value N_{TA} to be applied by the user equipment 10 for transmitting data on PUSCH in the MessageA, a value other than zero may be used.

Note that, in cases of Option 1 and Option 3, as a timing advance value N_{TA} to be applied by the user equipment 10 for transmitting data on PUSCH, the user equipment 10 may use any one timing advance value N_{TA} among those of Alt 1 to Alt 3.

The base station 20 may transmit, to the user equipment 10, a notification that at least one of the timing advance value N_{TA} to be applied by the user equipment 10 for transmitting a random access preamble in MessageA of the 2-step RACH and the timing advance value N_{TA} to be applied by the user equipment 10 for transmitting data on PUSCH in MessageA is not set to zero.

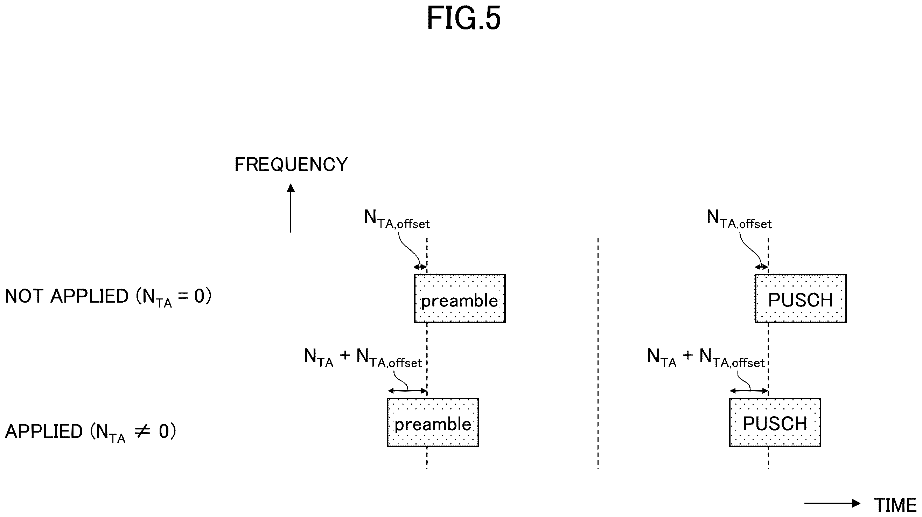

As an example, with reference to FIG. 5, a case of Alt1 + Option 1 is considered. Namely, the case is considered in which the user equipment 10 applies, as a timing advance value N_{TA} used for transmitting a random access preamble in MessageA in the 2-step RACH, the timing advance value N_{TA} that is retained before transmitting the random access preamble in the MessageA in the 2-step RACH, or the timing advance value N_{TA} determined based on the information retained by the user equipment 10 before transmitting the random access preamble, and in which the user equipment 10 uses, as a timing advance value N_{TA} to be applied by the user equipment 10 for transmitting data on PUSCH in MessageA in the 2-step RACH, a value that is the same as the timing advance value N_{TA} applied by the user equipment 10 for transmitting the random access preamble in the MessageA.

In this case, when the base station 20 transmits, to the user equipment 10, a notification that the timing advance value N_{TA} to be applied by the user equipment 10 for transmitting a random access preamble in MessageA of the 2-step RACH and a timing advance value N_{TA} to be applied by the user equipment 10 for transmitting data on PUSCH in the MessageA are set to a non-zero value (the case of "applied" in Fig. 5 (N_{TA} # 0)), the user equipment 10 uses the timing advance value N_{TA} retained before transmission of the random access preamble in the MessageA of the 2-step RACH or the timing advance value N_{TA} determined by the user equipment 10 based on information retained before transmission of the random access preamble as the timing advance value N_{TA} to be applied by the user equipment 10 for transmitting the random access preamble in the MessageA of the 2-step RACH, and the timing advance value N_{TA} to be applied by the user equipment 10 for transmitting data on PUSCH in the MessageA.

Alternatively, in this case, when the base station 20 transmits, to the user equipment 10, a notification that the timing advance value N_{TA} to be applied by the user equipment 10 for transmitting the random access preamble in the MessageA of the 2-step RACH and the timing advance value N_{TA} to be applied by the user equipment 10 for transmitting data on PUSCH in the MessageA are set to zero (the case of "not applied" in Fig. 5 (N_{TA} = 0)), the user equipment 10 uses N_{TA} = 0 as the timing advance value N_{TA} to be applied by the user equipment 10 for transmitting the random access preamble in the MessageA of the 2-step RACH and the timing advance value N_{TA} to be applied by the user equipment 10 for transmitting data on PUSCH in the MessageA.

The base station 20 may transmit, to the user equipment 10, a notification of whether to set the timing advance value N_{TA} to be applied by the user equipment 10 for transmitting the random access preamble in the MessageA of the 2-step RACH to zero, and/or whether to set the timing advance value N_{TA} to be applied by the user equipment 10 for transmitting data on PUSCH in the MessageA to zero.

### (Device Configurations)

Next, examples of functional configurations of the user equipment 10 and the base station 20 for executing the above-described processing and operation are described. The user equipment 10 and the base station 20 include all the functions for executing the above-described embodiments. However, each of user equipment 10 and the base station 20 may be provided with only some functions described in the embodiments. Note that the user equipment 10 and the base station 20 may be collectively referred to as a communication apparatus.

### <User Equipment>

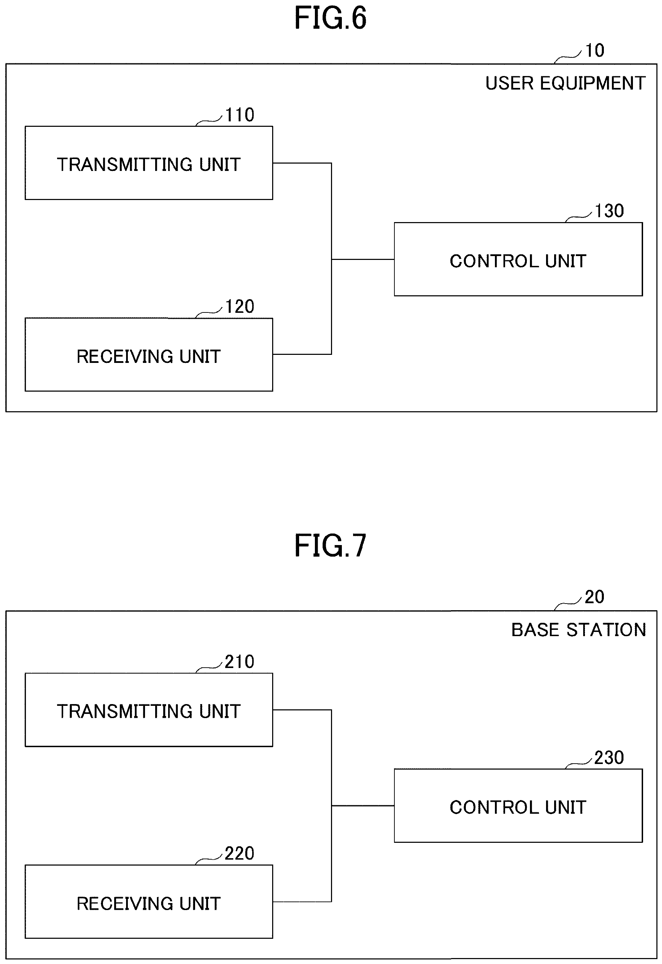

FIG. 6 is a diagram illustrating an example of a functional configuration of the user equipment 10. As illustrated in Fig. 6, the user equipment 10 includes a transmitting unit 110, a receiving unit 120, and a control unit 130. The functional configuration illustrated in FIG. 6 is an example.

A functional division and the names of the functional units may be any division and the names provided that the operation according to the embodiments can be executed. The transmitting unit 110 may be referred to as a transmitter, and the receiving unit 120 may be referred to as a receiver.

The transmitting unit 110 creates transmission from transmission data, and wirelessly transmits the transmission signal. The transmitting unit 110 can form one or a plurality of beams. The receiving unit 120 wirelessly receives various signals, and obtains a higher layer signal from the received physical layer signal. Furthermore, the receiving unit 120 includes a measurement unit that obtains received power or the like by performing a measurement of a received signal.

The control unit 130 controls the user equipment 10. Note that, a function of the control unit 130 related to transmission may be included in the transmitting unit 110, and a function of the control unit 130 related to reception may be included in the receiving unit 120.

For example, in the 4-step RACH procedure, the transmitting unit 110 transmits a random access preamble. The receiving unit 120 receives a random access response from the base station 20. The control unit 130 obtains information of a radio resource for transmitting the Message 3 from the random access response. The transmitting unit 110 transmits the Message 3 to the base station 20 through the radio resource configured by the control unit 130. The receiving unit 120 receives the Message 4 from the base station 20.

In addition, for example, in the 2-step RACH procedure, the transmitting unit 110 transmits a Message A. That is, the transmitting unit 110 transmits, to the base station 20, a random access preamble in the 2-step RACH procedure, and performs transmission of data on PUSCH in the 2-step RACH procedure before receiving a message corresponding to the Message 2 in the 4-step RACH procedure. The receiving unit 120 receives a Message B.

In the 2-step RACH procedure, the control unit 130 can use a value other than zero as a timing advance value N_{TA} to be applied when the transmitting unit 110 transmits a random access preamble in the MessageA. For example, the control unit 130 can use, as a timing advance value N_{TA} to be applied when the transmitting unit 110 transmits the random access preamble in the MessageA of the 2-step RACH, the timing advance value N_{TA} retained before transmission of the random access preamble in the MessageA of the 2-step RACH, or the timing advance value N_{TA} determined by the user equipment 10 based on the information retained before transmission of the random access preamble. Alternatively, the control unit 130 can use, as the timing advance value N_{TA} that is applied when the transmitting unit 110 transmits a random access preamble, a timing advance value N_{TA} received from the base station 20 by the receiving unit 120 that is to be applied by the user equipment 10 for transmitting a random access preamble in the MessageA of the 2-step RACH.

In addition, in the 2-step RACH procedure, as the timing advance value N_{TA} to be applied when the transmitting unit 110 transmits data on PUSCH in the MessageA, the control unit 130 may use a value that is the same as the timing advance value N_{TA} applied by the control unit 130 for transmission of a random access preamble in MessageA, or the control unit 130 may use a different value.

Furthermore, in the 2-step RACH procedure, as the timing advance value N_{TA} to be applied when transmitting data on PUSCH in the MessageA in the 2-step RACH, the control unit 130 may always use zero, and the control unit 130 may use a value other than zero as the timing advance value N_{TA} to be applied when transmitting the random access preamble in the MessageA.

Furthermore, in the 2-step RACH procedure, as the timing advance value N_{TA} to be applied when transmitting the random access preamble in the MessageA of the 2-step RACH, the control unit 130 may always use zero, and the control unit 130 may use a value other than zero as the timing advance value N_{TA} to be applied when transmitting data on PUSCH in the MessageA.

Furthermore, in the 2-step RACH procedure, as a timing advance value to be applied when transmitting the random access preamble in the MessageA of the 2-step RACH and a timing advance value to be applied when transmitting data on PUSCH in the MessageA, the receiving unit 120 may receive separate values from the base station 20, and the control unit 130 may use the separate values received by the receiving unit 120 as the timing advance value to be applied when transmitting the random access preamble in the MessageA of the 2-step RACH and the timing advance value to be applied when transmitting data on PUSCH in the MessageA.

### <Base Station 20>

Fig. 7 is a diagram illustrating an example of a functional configuration of the base station 20. As illustrated in Fig. 7, the base station 20 includes a transmitting unit 210, a receiving unit 220, and a control unit 230. A functional configuration illustrated in Fig. 7 is an example.

A functional division and names of the functional units may be any division and names provided that the operation according to the embodiments can be executed. Note that, the transmitting unit 210 may be referred to as a transmitter, and the receiving unit 220 may be referred to as a receiver.

The transmitting unit 210 includes a function of generating a signal to be transmitted to the user equipment 10, and wirelessly transmitting the signal. The receiving unit 220 includes a function of receiving various signals transmitted from the user equipment 10, and obtaining, for example, information of a higher layer from the received signals. Furthermore, the receiving unit 220 includes a measurement unit that obtains received power or the like by measuring a signal received by the receiving unit 220.

The control unit 230 controls the base station 20. Note that, a function of the control unit 230 related to transmission may be included in the transmitting unit 210, and a function of the control unit 230 related to reception may be included in the receiving unit 220.

For example, in the 4-step RACH procedure, the receiving unit 220 receives a random access preamble transmitted from the user equipment 10. The transmitting unit 210 transmits a random access response to the user equipment 10. The control unit 230 includes, in the random access response, information indicating a radio resource for transmitting the Message 3 by the user equipment 10. The receiving unit 220 receives the Message 3 from the user equipment 10 through the radio resource configured by the control unit 230. The transmitting unit 210 transmits the Message 4 to the user equipment 10.

In addition, for example, in the 2-step RACH procedure, the receiving unit 220 receives the MessageA transmitted from the user equipment 10. That is, the receiving unit 220 receives the random access preamble in the 2-step RACH procedure from the user equipment 10, and the receiving unit 220 receives data on PUSCH in the 2-step RACH procedure before transmitting a message corresponding to the Message 2 in the 4-step RACH procedure. The transmitting unit 210 performs transmission of the Message B.

Furthermore, in the 2-step RACH procedure, the control unit 230 sets the timing advance value N_{TA} to be applied by the user equipment 10 when transmitting the random access preamble in the MessageA of the 2-step RACH, and the transmitting unit 210 transmits the timing advance value N_{TA} to the user equipment 10.

Furthermore, the control unit 230 may configure that at least one of the timing advance value N_{TA} to be applied by the user equipment 10 when transmitting the random access preamble in the MessageA of the 2-step RACH or the timing advance values N_{TA} to be applied by the user equipment 10 when transmitting data on PUSCH in the MessageA is not set to zero, and the transmitting unit 210 may transmit a signal indicating information configured by the control unit 230 to the user equipment 10.

Furthermore, in the 2-step RACH procedure, as a timing advance value to be applied by the user equipment 10 when transmitting the random access preamble in the MessageA of the 2-step RACH and a timing advance value to be applied by the user equipment 10 when transmitting data on PUSCH in the MessageA, the control unit 230 may set separate values, and the transmitting unit 210 may transmit the separate values set by the control unit 230 to the user equipment 10.

### (Hardware configuration)

In the block diagrams (FIGs. 6 and 7) used for the description of the embodiments, the blocks of the functional units are illustrated. The functional blocks (configuring units) are implemented by any combination of hardware and/or software. A device of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, a wired and/or wireless manner).

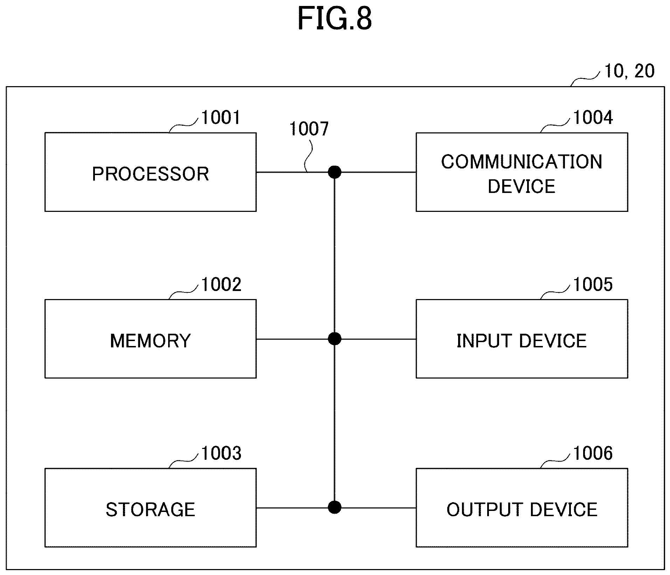

Furthermore, for example, both the user equipment 10 and the base station 20 in one embodiment of the present invention may function as a computer that performs the process according to the embodiments. FIG. 8 is a diagram illustrating an example of a hardware configuration of each of the user equipment 10 and the base station 20 according to the embodiments. Each of the user equipment 10 and the base station 20 may be physically configured as a computer device including a processor 1001, a memory 1002, a storage 1003, a communication device 1004, an input device 1005, an output device 1006, a bus 1007, and the like.

In the following description, the term "device" may be replaced with a circuit, device, unit, or the like. The hardware configuration of each of the user equipment 10 and the base station 20 may be configured to include one or more devices indicated by 1001 to 1006 illustrated in the figure or may be configured without including some devices.

Each function in each of the user equipment 10 and the base station 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like.

Furthermore, the processor 1001 reads a program (program code), a software module, or data from the storage 1003 and/or the communication device 1004 out to the memory 1002, and executes various types of processes according to them. A program causing a computer to execute at least some of the operations described in the embodiments is used as the program. For example, the transmitting unit 110, the receiving unit 120, and the control unit 130 of the user equipment 10 illustrated in FIG. 6 may be implemented by a control program which is stored in the memory 1002 and operates on the processor 1001. The transmitting unit 210, the receiving unit 220, and the control unit 230 of the base station 20 illustrated in FIG. 7 may be implemented by a control program which is stored in the memory 1002 and operates on the processor 1001. Various types of processes are described to be performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present invention.

The storage 1003 is a computer-readable recording medium and may be configured with, for example, at least one of an optical disk, such as a compact disc ROM (CD-ROM), a hard disk drive, a flexible disk, a magneto-optical disk (for example, a compact disk, a digital versatile disk, or a Bluray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transmitting and receiving device) for performing communication between computers via a wired and/or wireless network and is also referred to as a "network device," a "network controller," a "network card," a "communication module," or the like. For example, the transmitting unit 110 and the receiving unit 120 of the user equipment 10 may be implemented by the communication device 1004. Furthermore, the transmitting unit 210 and the receiving unit 220 of the base station 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected via the bus 1007 to communicate information with each other. The bus 1007 may be configured with a single bus or may be configured with different buses between the devices.

Furthermore, each of the user equipment 10 and the base station 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of the embodiments)

In this specification, at least the following user equipment and communication method are disclosed.

A user equipment including a control unit that sets a value other than zero, as a timing advance value to be applied for transmitting a random access preamble in a MessageA transmission in a 2-step random access procedure; and a transmitting unit that transmits the random access preamble in the MessageA transmission in the 2-step random access procedure by applying the timing advance value set by the control unit.

According to the above-described configuration, when the user equipment performs the 2-step random access procedure in a state in which a timing advance value that is previously obtained by the user equipment is valid, by using the valid timing advance value, the 2-step random access procedure can be used even if a distance between the user equipment 10 and the base station 20 is greater than or equal to a certain distance. Accordingly, the scope of use cases in which the 2-step random access procedure is usable can be enlarged.

The control unit may set the timing advance value to be applied for transmitting the random access preamble, as a timing advance value to be applied for transmitting data on a physical uplink shared channel in the MessageA transmission in the 2-step random access procedure.

The user equipment may further include receiving unit that receives information indicating the timing advance value to be applied for transmitting the random access preamble, and the control unit may set, based on the information received by the receiving unit, the timing advance value to be applied for transmitting the random access preamble.

The receiving unit may receive information indicating a timing advance value to be applied for transmitting data on a physical uplink shared channel in the MessageA transmission in the 2-step random access procedure, and the control unit may set, based on the information received by the receiving unit, the timing advance value to be applied for transmitting the data on the physical uplink shared channel.

The control unit may set, as the timing advance value to be applied for transmitting the random access preamble, a timing advance value retained by the control unit before starting the 2-step random access procedure, or a timing advance value that is determined based on information retained by the control unit before starting the 2-step random access procedure. The control unit may set, as a timing advance value to be applied for transmitting data on a physical uplink shared channel in the MessageA transmission in the 2-step random access procedure, a timing advance value retained by the control unit before starting the 2-step random access procedure, or a timing advance value that is determined based on information retained by the control unit before starting the 2-step random access procedure.

A communication method executed by a user equipment, the method including setting a value other than zero, as a timing advance value to be applied for transmitting a random access preamble in a MessageA transmission in a 2-step random access procedure; and transmitting the random access preamble in the MessageA transmission in the 2-step random access procedure by applying the timing advance value set.

According to the above-described configuration, when the user equipment performs the 2-step random access procedure in a state in which a timing advance value that is previously obtained by the user equipment is valid, by using the valid timing advance value, the 2-step random access procedure can be used even if a distance between the user equipment 10 and the base station 20 is greater than or equal to a certain distance. Accordingly, the scope of use cases in which the 2-step random access procedure is usable can be enlarged.

### (Supplement of embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the user equipment 10 and the base station 20 are described using the functional block diagrams, but such devices may be implemented by hardware, software, or a combination thereof. Software executed by the processor included in the user equipment 10 according to the embodiment of the present invention and software executed by the processor included in the base station 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be modified in order as long as there is no contradiction. For example, the method described in this specification presents elements of various steps in an exemplary order and is not limited to a presented specific order.

In this specification, a specific action that is supposed to be performed by the base station 20 may be performed by an upper node in some cases. In the network including one or more network nodes including the base station 20, various operations performed for communication with the user equipment 10 can be obviously performed by the base station 20 and/or any network node (for example, an MME, an S-GW, or the like is considered, but it is not limited thereto) other than the base station 20. The example in which the number of network nodes excluding the base station 20 is one has been described above, but a combination of a plurality of other network nodes (for example, an MME and an S-GW) may be provided.

Each aspect/embodiment described in this specification may be used alone, may be used in combination, or may be switched in association with execution.

The user equipment 10 is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station 20 may also be referred to as a Node B (NB), an enhanced Node B (eNB), a base station, a gNB, or other appropriate terms, by those having skill in the art.

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similar to a term "provided with (comprising)" as long as the terms are used in this specification or claims set forth below. Furthermore, the term "or" used in this specification or claims set forth below is intended not to be an exclusive OR.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the gist and scope of the present invention defined by the claims set forth below. Accordingly, the description of this specification is intended to be exemplary and does not have any restrictive meaning to the present invention.

### LIST OF REFERENCE SYMBOLS

- 10: user equipment
- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A user equipment comprising:
a control unit that sets a value other than zero, as a timing advance value to be applied for transmitting a random access preamble in a MessageA transmission in a 2-step random access procedure; and
a transmitting unit that transmits the random access preamble in the MessageA transmission in the 2-step random access procedure by applying the timing advance value set by the control unit.

2. The user equipment according to claim 1, wherein the control unit sets the timing advance value to be applied for transmitting the random access preamble, as a timing advance value to be applied for transmitting data on a physical uplink shared channel in the MessageA transmission in the 2-step random access procedure.

3. The user equipment according to claim 1, further comprising:
receiving unit that receives information indicating the timing advance value to be applied for transmitting the random access preamble, and
wherein the control unit sets, based on the information received by the receiving unit, the timing advance value to be applied for transmitting the random access preamble.

4. The user equipment according to claim 3, wherein the receiving unit receives information indicating a timing advance value to be applied for transmitting data on a physical uplink shared channel in the MessageA transmission in the 2-step random access procedure, and
the control unit sets, based on the information received by the receiving unit, the timing advance value to be applied for transmitting the data on the physical uplink shared channel.

5. The user equipment according to claim 1, wherein the control unit sets, as the timing advance value to be applied for transmitting the random access preamble, a timing advance value retained by the control unit before starting the 2-step random access procedure, or a timing advance value that is determined based on information retained by the control unit before starting the 2-step random access procedure.

6. The user equipment according to claim 1, wherein the control unit sets, as a timing advance value to be applied for transmitting data on a physical uplink shared channel in the MessageA transmission in the 2-step random access procedure, a timing advance value retained by the control unit before starting the 2-step random access procedure, or a timing advance value that is determined based on information retained by the control unit before starting the 2-step random access procedure.

7. A communication method executed by a user equipment, the method comprising:
setting a value other than zero, as a timing advance value to be applied for transmitting a random access preamble in a MessageA transmission in a 2-step random access procedure; and
transmitting the random access preamble in the MessageA transmission in the 2-step random access procedure by applying the timing advance value set.
